(19) Europäisches Patentamt
European Patent Office
Office européen des brevets

(11) EP 1 972 597 A1

(12) EUROPEAN PATENT APPLICATION
published in accordance with Art. 158(3) EPC

(43) Date of publication:
24.09.2008 Bulletin 2008/39

(51) Int Cl.:
C01B 3/02 (2006.01)          C25B 1/06 (2006.01)
B01D 12/00 (2006.01)

(21) Application number: 06805231.5

(22) Date of filing: 13.11.2006

(86) International application number:
PCT/CN2006/003046

(87) International publication number:
WO 2007/071151 (28.06.2007 Gazette 2007/26)

(84) Designated Contracting States:
DE FR GB

(30) Priority: 21.12.2005 CN 200510111758

(71) Applicant: Shanghai Institute of Applied Physics,
Chinese ACA
Jiading District
Shanghai 201-800 (CN)

(72) Inventors:
• ZHANG, Lijuan
Shanghai 201800 (CN)
• HU, Jun
Shanghai 201800 (CN)

• FANG, Haiping
Shanghai 201800 (CN)
• FAN, Chunhai
Shanghai 201800 (CN)
• ZHANG, Yi
Shanghai 201800 (CN)
• SHEN, Guangxia
Shanghai 201800 (CN)

(74) Representative: Lamb, Richard Andrew
Urquhart-Dykes & Lord LLP
New Priestgate House
57 Priestgate
Peterborough
Cambridgeshire PE1 1JX (GB)

(54) A METHOD FOR STORING GAS

(57) This invention released a method for gas storage, **characterized that** gas is stored in the form of nanometer scale bubbles or gas layers on the solid-liquid surfaces. Said gas is hydrogen, the surface of the solid is planar solid surface, irregular solid surface, or porous material surface, especially highly oriented pyrolytic graphite (HOPG) surface, and the liquid is water, inorganic acid, inorganic salt, inorganic alkali, organic solution or colloid solution. The gas to be stored is produced by electrochemical method, inorganic reaction, organic reaction, biologic reaction or physical method.

Figure 1

## Description

### Fields of the Invention

This invention relates to a new method for gas storage. Particularly, it refers to a method for gas storage in the form of nanobubbles or nano gas layers on the solid-liquid surface.

### Background of the Invention

The storage of high purified gas can be used in a lot of fields, especially the storage of hydrogen which is very significant in utilization of hydrogen energy. But recently human being faces a flinty challenge from energy, resource and environmental crisis. This is caused by traditional energy sources, such as petroleum and coal, which become less and less, and greenhouse effects and acid rain produced by conflagrant productions of petroleum and coal, $CO_2$ and $SO_2$. So, human being needs clear and new energy sources. Hydrogen energy attracts much attention from a wide audience of scientists due to reproduction and abundant resources. More importantly, hydrogen does not cause the environmental pollution and is a very ideal and clear energy source. The storage of hydrogen is the key of utilization and also the scabrous problem. Many countries are paying great money trying to resolve this problem. In 2003, the United States financed US$ 1200 millions to develop hydrogen producing and storage. There are two important indexes to quantify the hydrogen storage, volume density ($kgH_2/m^3$) and mass percentage (wt %). Volume density defines the hydrogen mass of storage per volume in this system. Mass percentage defines the ratio of hydrogen mass and system mass. Of course, there are also other parameters such as the reversibility of charging and releasing of the hydrogen, the charging speed of the hydrogen, and so on. The purpose is to store more hydrogen as possible in a smaller volume and a smaller mass storage system under environmental temperature and lower pressure. The authoritative standard is the one released by U.S. Department of Energy (DOE). For fuel cell vehicles, the main standard to quantify the storage of hydrogen is the volume density should reach $62kg/m^3$, mass fraction of 6.5% (Hynek, S.; Fuller, W.; Bentley, J. Hydrogen storage by carbon sorption. Int. J. Hydrogen Energy 1997, 22, 601- 610). Besides, the reversibility of charging and releasing of hydrogen is a very important index. All in all, the aim is to store more hydrogen as possible in a smaller volume and a smaller mass storage system under environmental temperature and lower pressure, and the fast speed of charging and releasing of hydrogen and the lifetime are also standard.

Traditional storage of hydrogen has two ways. One way is using steel bottle with high pressure to store hydrogen. But in this case, although the pressure of steel bottle inside reaches 150 atm, the mass of hydrogen is less than 1 percent of the bottle and it is also very dangerous to explode. Another way is to store liquid hydrogen. i.e., the temperature of gas hydrogen is decreased to -253 °C and hydrogen becomes liquid to store. But in this method the storage box must be very large and has perfect adiabatic performance to prevent liquid hydrogen from evaporation. Therefore, storing hydrogen under high pressure needs large vessel and good materials, but has low energy density and safety to use. Although energy density of the liquid hydrogen is high, it costs energy and money, and is difficult to operate and use.

Recently, several new methods were developed, mainly by developing new materials of hydrogen storage by which hydrogen can be absorbed physically/chemically or reacted chemically. So far, the materials for hydrogen storage are sorted into three types: liquid organic compounds, alloy materials and nonmetal materials. All those materials have advantages and disadvantages.

The storage of hydrogen by liquid organic compound is that hydrogen is happened addition reaction with unsaturated organic compound by chemical catalysis reaction, for example, benzene reacts with toluene to produce cyclohexane, and so on. This method has high density of hydrogen storage of about 7% but the process of absorption and release of hydrogen is complex and also causes a lot of problems, such as the recycle of organic compounds is very difficult.

As for alloy compound for hydrogen storage, developed materials are lanthanon and titanic alloy materials. The volume density of those materials for hydrogen storage is very high, but the mass density is only 2%, and the materials are very expensive and incidental materials poisoning decreases the storage ability. Although some light alloy materials have large mass fraction of hydrogen storage, the speed of absorption and release of hydrogen is low and the process of hydrogen storage is not reversible completely.

Inorganic nonmetal materials for hydrogen storage have a lot of types, such as glass microsphere and carbon based materials. It is found that carbon based materials are very nice hydrogen absorbents. They include activated carbon, carbon nanotube, carbon nanofibers and layers graphite, and so on. Among them, the mass fraction of absorbing hydrogen of traditional activated carbon is less than 1 % under low temperature. However, for superactivated carbon with surface areas of 3000 $m^2/g$, volumes of micro-hole of 1.5 Ml/g, mass fraction of absorbing hydrogen can reach to 5% under the special condition of low temperature and high pressure. USA patent 6, 290, 753 disclosed a carbon material for hydrogen storage via cone microstructures. Under the condition of temperature of 22-527 °C and the pressure of 0.3-10 atm, the mass fraction of hydrogen storage can exceed 15%. During couple of years research on carbon nanotubes and carbon nanofibers used for hydrogen storage became hot topics. There have been many patents and documentations related to carbon nanotubes. For example, USA Patent 6,517,800 disclosed a method of hydrogen storage via carbon nanotubes with single wall in which the storage amount is about 4.24 % using this material under normal temperature and pressure of 100-120 atm. Dillon obtained mass fraction of hydrogen storage is about 5-10% using single wall carbon nanotubes under normal temperature and pressure of about 40kPa (Dillon, A. C.; Jones, K. M.; Bekkedahl, T. A.; Kiang, C. H.; Bethune, D. S.; Heben, M. J. Storage of hydrogen in single-walled carbon nanotubes. Nature 1997, 386, 377-379.) Ye et al also obtained the mass fraction of hydrogen absorption of 8.25% using single wall carbon nanotubes with 98% purity under the temperature of -193°C and pressure above 4MPa. Results from different researchers are different and they debates. It is reported that the highest mass fraction of hydrogen storage in carbon nanotubes is 67%, and the lowest fraction is only 0.1 % (Hirscher, M.; Becher, M.; Haluska, M.; Zeppelin, F.; Chen, X.; Dettlaff-Weglikowska, U.; Roth, S. Are carbon nanostructures an efficient hydrogen storage medium? Journal of Alloys and Compounds 2003, 356-357, 433-437.) Carbon nanofibers also do not go on wheels. For example, Chambers et al got the mass fraction of hydrogen storage of 67% under the condition of 12 MPa, 25°C. But nobody can repeat this result until now (Rodriguez, N. M.; Chambers, A.; Baker, R. T. K. Catalytic engineering of carbon nanostructures. Langmuir 1995,11, 3862-3866). In summary, carbon materials for hydrogen storage still exist a lot of problems, such as low speed of absorption and release of hydrogen, i.e., it needs 5h to reach the largest volume for carbon nanotubes, 12h for carbon nanofibers. Also, the stability of absorbed volume is bad, 8 cycles of absorption and release make the absorption volume decrease 30%, and since the strong dependence on pressure and temperature, carbon nanomaterials for hydrogen storage must be done under high pressure or low temperature, technique of preparation is very complex.

## Summary of the Invention

The object of this invention is to overcome the disadvantage of the prior art and provides a new method for gas storage, particularly a new method for hydrogen storage. This method has perfect repeatability, can perform under the normal temperature and pressure easily, does not bring contaminations, and the density of hydrogen storage per surface area is high and the speed of filling and releasing of hydrogen is fast.

The research in the lab found that gases can be stably absorbed on solid-liquid surface with high density in the form of nanobubbles or gas nanolayers. But this can not be explained by macroscopic theory. If the gas molecules inside the bubbles aggregate as macroscopic gas, the pressure of nanobubbles with the radii of 10 nm may be 144 atm which will cause them disappear instantly. But if the gas in nanobubbles exists in a new state with high density, the nanobubbles might stably exist on solid-liquid surface. The applicants of this invention obtained by molecular dynamics simulation that the density of hydrogen nanobubbles is about 420 times higher than that of hydrogen gas density in macroscopic scale, and is about 53 percents of density of liquid hydrogen ($70kg/m^3$). This is also supported by the conclusion of reduced density layer on hydrophobic interface reported by other groups. They detected a layer by neutron scattering or X ray with the reduced density of $0.65{\sim}0.95g/cm^3$ which is presumed as gas layer, but no direct evidence (Steitz R. et al. Nanobubbles and their precursor layer at the interface of water against a hydrophobic substrate. Langmuir 2003, 19, 2409-2414 ; Schwendel D. et al. Interaction of water with self-Assembled monolayers: neutron reflectivity measurements of the water density in the interface region. Langmuir 2003, 19, 2284-2293.). Based on the finding that flat and smooth surface can absorb nanobubbles or gas nanolayer with high coverage and density, this invention is provides a new method for gas storage, particularly a method for hydrogen storage. This invention can be achieved via the following technical solutions:

1. Establishment of solid-liquid surfaces. The substrate for hydrogen storage in this invention needs an appropriate solid-liquid surface. Solids can be flat surfaces, surfaces of porous materials or irregular solid surfaces. Liquids can be water, inorganic acid, inorganic salt, inorganic base solution, organic solution, macromolecular solution and colloidal solution, all solution of holding nanobubbles or gas layers.

2. The sources of hydrogen. The sources of hydrogen in this invention can be hydrogen obtained by electrochemical reactions, inorganic reactions, organic reactions, biological reactions and physical methods, and so on.

3. The detection of nanobubbles/nano gas layers near the solid-liquid surface. By using atomic force microscopy (AFM), neutron scattering, X-ray reflectivity etc the formation of nanobubbles/nano gas layer on the interface can be detected.

This invention further provides an integrative method of producing and storing hydrogen. The feature is that hydrogen is produced by electrochemical approach in electrolyte solution, and the conductive and flat solid surface is used as cathode to absorb nanoscale hydrogen bubbles or gas layers. It is performed by following technical solutions:

1. The choice of electrodes of electrolysis. Conductive and flat solid, preferably the highly oriented pyrolytic graphite (HOPG), is used as cathodes. Inert conductive materials platinum, silver and nickel are used as anodes and reference electrodes.

2. The choice of electrolytes. Electrolytes are the solution of 0.001~10 mol/L of acidic solution, base solution of alkali metals, or base solution of alkaline-earth metals. The preferred concentration of electrolytes is 0.001~2.0 mol/L. Acidic solution of electrolytes is chosen from inorganic acids, namely, sulfuric acid, nitric acid, phosphate acid and acetate acid etc. Base solution is chosen from inorganic bases, namely, sodium hydroxide, potassium hydroxide, calcium hydroxide, barium hydroxide and magnesium hydroxide etc. Salt solution is chosen from nitrate, sulfate, carbonate and phosphate of sodium ions, potassium ions, calcium ions and magnesium ions.

3. Electrochemical reactions. The condition of electrolysis: the range of voltage between cathode and anode is from 0.5V to 3V, preferably 1.0V to 2.5V Reaction time is at least 0.01 s, preferably 5~30s.

$$\text{Electrode reaction of cathode: } 2H^+ + 2e^- \rightarrow H_2 \text{ (acidic solution)}$$

$$2H_2O + 2e^- \rightarrow H_2 + 2OH^- \text{ (salt and base solution)}$$

4. The detection of hydrogen nanobubbles / nano gas layers near the solid-liquid surface. The formation of hydrogen naonbubbles / nano gas layers can be observed by using AFM.

The HOPG aforesaid in this invention is a new conductive high purity carbon with layer structures, and is the highest level of graphite (ZYA level).

In this invention, the AFM used for observation is NanoScope IIIa SPM system (Digital Instruments, Inc.) with O-ring, liquid cell, "E" scanner and normal NP tip with the spring constant of 0.58 N/m. the tip should be cleaned by water, ethanol and acetone respectively. Imaging is performed under the normal temperature and pressure.

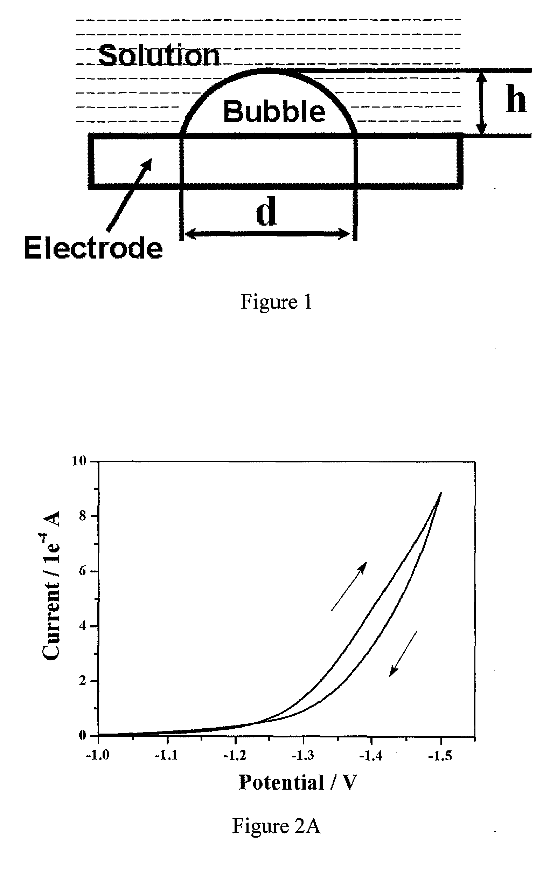

As for the nanobubbles formed on the cathode surface, the volume of single nanobubble should be obtained firstly when calculating the amount of gas storage. Therefore, this invention presents the model of nanobubbles absorbed on interface as shown in Figure 1. In Figure 1 chord length d and height h of bubble spherical cap are indicated. Both can be measured by AFM.

The volume of single nanobubble: $V_c = \frac{1}{6}\pi h(\frac{3}{4}d^2 + h^2)$,

Average volume of several nanobubbles on certain areas: $V_{apparent} = \frac{1}{6}H_{mean}(3S_{mean} + \pi H_{mean}^2)$,

Wherein, $V_{apparent}$ is average volume of many nanobubbles on the graphite within certain areas. $H_{mean}$ is average height of nanobubbles produced on the graphite surface within certain areas. $S_{mean}$ is average area of a nanobubble contacting with the graphite.

Firstly, hydrogen nanobubbles are observed and images are saved. Then average area $S_{mean}$ and average height $H_{mean}$ are obtained by "particle analysis" in off-line of AFM software. According to the model shown in Figure 1, the volume of hydrogen nanobubbles produced can be calculated. Repeating the above steps, the volumes of nanobubbles are obtained in different voltage and different reaction time.

Hydrogen stored on surface of cathode can be released by many methods, such as draining of the water covering the nanobubbles, mechanical disturbance, ultrasonic disturbance or heating etc can make the hydrogen release.

Obviously, in order to store more hydrogen, we hope that surface area of the solid used as substrates is as large as possible. For example, solid can be disposed by layers or hydrogen is absorbed on materials with large surface areas such as porous materials and carbon nanotubes, by which storage of hydrogen can be increased sharply.

In this invention the volume of nanobubbles and output of the hydrogen can be controlled by changing the voltage and time in the electrochemical reaction. Hydrogen nanobubbles are very stable, they can exist more than ten hours without disturbance, and their morphology has no obvious changes during the experimental time. This invention has prefect repeatability, can perform under the normal temperature and pressure easily, does not cause pollution, and of the hydrogen is released easily. Moreover, the device is low cost, easily to produce, transport and operate with high safety and long lifetime. This method can achieve high density of hydrogen storage fast speed of filling and releasing of hydrogen. The method of hydrogen storage provided by this invention has large potential application value in the utilization of hydrogen source, especially in automobile fuel battery, storage battery and other fields.

## Brief Description of the Drawings

Figure 1 is a model of nanobubble absorbed on the surface according to this invention.

Figure 2A is the cyclic voltammetric (CV) curve of electrolyzing water according to this invention.

Figure 2B is an AFM image of hydrogen nanobubbles formed by electrolyzed reaction according to this invention.

Figure 3 is an AFM image of hydrogen nanobubbles with large coverage obtained in an embodiment according to this invention.

Figure 4 is an image (a) of hydrogen nanobubbles before release and an image (b) of hydrogen nanobubbles after release according to this invention.

Figure 5 is a schematic section of a device in embodiment 1 according to this invention.

Figure 6A is an AFM image of nitrogen nanobubbles obtained on mica surface by the exchanging of ethanol and water.

Figure 6B is an AFM image of nitrogen nanobubbles obtained on graphite surface by the exchanging of ethanol and water.

Figure 7 is an AFM image of nitrogen nano gas layers obtained on graphite surface by the exchanging of ethanol and water.

Figure 8 is the density curves of nitrogen absorbed on graphite surface obtained by molecular dynamic simulation.

Figure 9 is the density curves of hydrogen absorbed on graphite surface obtained by molecular dynamic simulation.

## Detailed Description of the Preferred Embodiments

The Following is the embodiments to further illustrate this invention, but is not intended to limit the invention.
Wherein, the AFM used in the embodiments is NanoScope IIIa SPM system (Digital Instruments, Inc.) with O-ring, liquid cell, "E" scanner and formal NP tip with the spring constant of 0.58 N/m. the tip should be cleaned by water, ethanol and acetone, respectively. The Water is Millipore water with high purity. The Electrolytes are GR grade which were purchased from Chinese Chemical Reagent Co. The electrochemical workstation used is bought from Shanghai Cheng Hua Instruments Company. The HOPG is purchased from Mikromasch Company.

## Embodiment 1

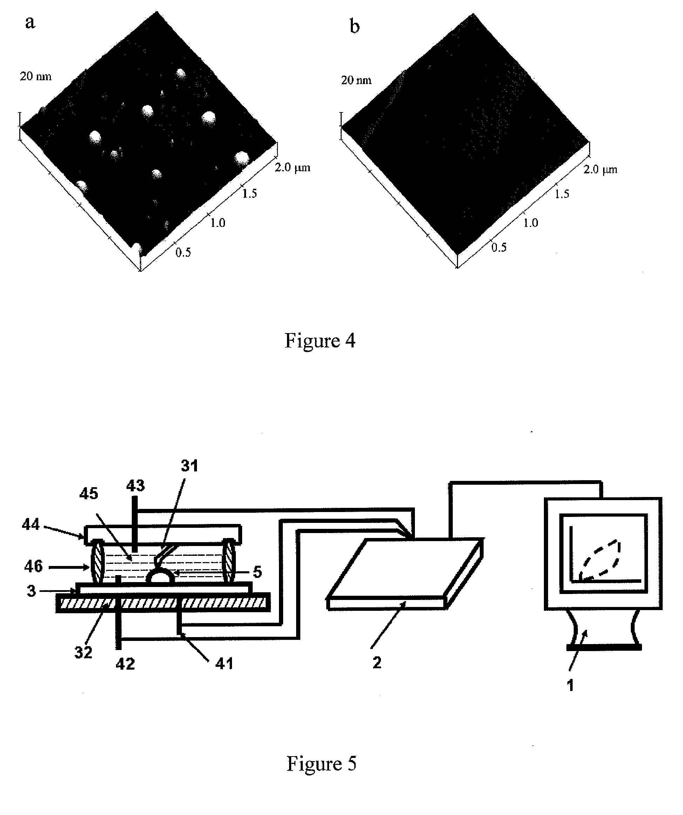

As shown in Figure 5, HOPG 3 in the size of 12 mm $\times$ 12 mm is used as the facility of hydrogen storage and substrate of AFM observation. HOPG 3 is glued on a matching magnet shim 32 via electric silver epoxy. HOPG 3's surface is freshly cleaved by adhesive tape prior to each experiment. Magnet shim 32 attaching HOPG 3 is absorbed on samples stage of AFM header (not shown in the drawings). AFM tip 31 is loaded to AFM liquid cell 44, the distance between tip 31 and graphite substrate 3 is adjusted to about $40\mu m$. O-ring is used to seal the space between liquid cell 44 and graphite substrate. This liquid cell 44 also has an drain hole. The diluted sulfuric acid solution of 0.001-10 mol/L 45 pre-degassed is rapidly poured into the liquid cell. Images of the formation of graphite surface detected by AFM before loading a voltage are used as references. Cathode lead 41 is leaded from graphite substrate 3, platinum used as reference electrode 42 is put into electrolytes 45 and anode platinum 43 is vertically put into the hole of liquid cell 44 and fixed. Three electrode clamps of electrochemical workstation 2 connected with computer 1 are clipped with corresponding electrodes. The aforesaid liquid cell 44, O-ring 46, HOPG 3, cathode 41, reference electrode 42, anode 43 and electrochemical workstation 2 compose the electrochemical device.
After loading electrodes to liquid cell, software to control electrochemical reactions is started and corresponding parameters can be set, power is switched on. In situ observation can be performed by AFM after loading a voltage and in reaction time on cathode surface, images are saved. The parameters of AFM are drive frequency of 7.2 KHz, drive amplitude of 280 mV, scan rate of 2 Hz, scan size of 12 $\mu$m $\times$ 12 $\mu$m, setpoint is ascertained by force curve.
According to the cyclic voltammetric (CV) curves of electrolyzing water (see Figure 2A), nanobubbles 5 are formed on the surface of graphite 3 while the voltage reaching to at least -1.0V, the formed nanobubbles are hydrogen nanobubbles. As shown in Figure 2B, the range of height of bubbles is from 5nm to 35nm. The size and amount of hydrogen nanobubbles can be controlled by the magnitude of voltage (-1.0V-2.5V) and the time loading voltage (1-120s). More concretely, if the range of the voltage is -1.0V-1.5V, the size of formed bubbles is about 15-100 nm, but the number of bubbles formed on per square micrometer of graphite electrode is about 10-50. If the range of voltage is from -1.6V to -2.5V, the size of formed bubbles is about 2-30 nm and the number of bubbles formed on per square micrometer of graphite electrode is about 40-250.

It is found in the lab that reaction is very stable when the concentration of sulfuric acid solution is about 0.001~1.0 mol/L and the voltage is about -1.2 V~2.5 V. Under this condition, a lot of bubbles can be formed after 5s-30s.

Then average area $S_{mean}$ and average height $H_{mean}$ are obtained by "particle analysis" in off-line process of atomic force microscopy software. According to the model equation 2 shown in Figure 1, the volume of hydrogen nanobubbles produced can be calculated. Repeating above steps, the volume of nanobubbles formed in different voltage and different reaction time can be obtained.

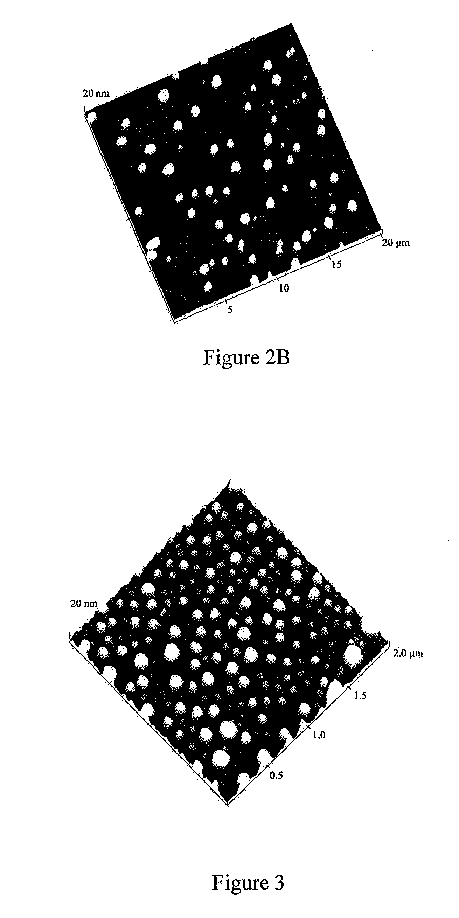

According to the calculation provided by U.S. Department of Energy, assuming graphite and absorbed hydrogen as a unit, weight fraction of hydrogen = mass of hydrogen/(mass of graphite + mass of hydrogen). In order to the comparison with the standard of hydrogen storage set by U.S. Department of Energy, we chose a typical image of hydrogen nanobubbles with high coverage (89%). As for image of hydrogen nanobubbles shown in Figure 3 (voltage:-2.0 V, time: 1.0 s), the underside area of each bubble is 4045 $nm^2$, the numbers of hydrogen nanobubbles absorbed on per square micrometer of graphite surface is 220, the volume and average height of hydrogen nanobubbles absorbed on per square micrometer of graphite surface are 9820066 $nm^3$ and 20 nm, respectively. In the calculation in this embodiment, the thickness of HOPG is 2 nm, its density is 2.27 $g/cm^3$, the density of nanobubbles on the interface is 0.037 $g/cm^3$. According to above calculation provided by U.S. Department of Energy, weight fraction of hydrogen = mass of hydrogen/ (mass of graphite + mass of hydrogen), putting above data into this equation: weight fraction = (9820066 $nm^3 \times$ 0.037 $g/cm^3$)/(2.27 $g/cm^3 \times$ 2 nm $\times$ 1 $\mu m^2$ + 0.037 $g/cm^3 \times$ 9820066 $nm^3$) = 7.4 %, that is weight fraction of hydrogen absorbed on graphite, exceeding the standard of 6.5 wt%.

Under the normal temperature and pressure, hydrogen can be released by draining of the water covering the nanobubbles through the drainpipe of liquid cell. As shown in Figure 4, Figure a is an image of hydrogen nanobubbles formed after loading a voltage, Figure b is an image showing that bubbles disappear after draining of the water on their surface, and hydrogen is released. So in this invention the production and release of hydrogen is very easy and fast.

The least voltage and time of producing hydrogen nanobubbles might be different in the different electrolytes. As for the same electrolyte, the size and number of nanobubbles are dominated by reaction voltage and time. For example, generally, the higher the voltage is applied, the smaller and the more nanobubbles are produced; the longer the reaction time, the more and the larger nanoubbles. Normally, the reaction time can not exceed 120 s because that too much time make bubbles merge each other, become larger and escape or broken, then the number of bubbles decreases. Of course, if further postpone the reaction time, bubbles may be formed on graphite surface again.

## Embodiment 2

The device and operation are same as those in embodiment 1. But potassium hydroxide solution of 0.001-10 mol/L is chosen as the electrolyte, the range of voltage loaded is -0.5 V - -2.0 V, the reaction time is at least 0.01 s. Under this condition, the range of height of nanobubbles is 2-100 nm.

The size of nanobubbles formed in the solution of sodium nitrate, potassium nitrate and barium sulphate etc. with concentration of 0.001-10 mol/L are same as that in the solution of sulfuric acid and potassium hydroxide. Here, we do not illustrate more embodiments about that.

## Embodiment 3

Nitrogen nanobubbles are obtained on different solid surfaces by the exchanging of ethanol and water.

In this invention the exchange of ethanol and water is a method that nanobubbes can be formed on solid surface by replacing gas - saturated ethanol solution in the container with gas - saturated water. Using this method excessive gases can be separated out because of the different solubility between water and ethanol to the same gas. That excessive gas can be absorbed on the surface and form nanobubbles.

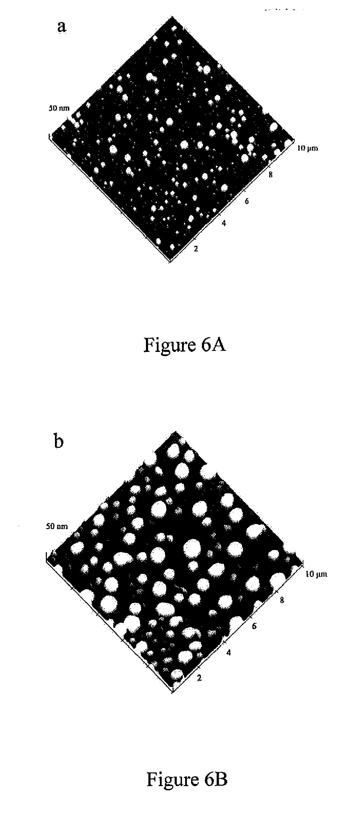

In this invention water and ethanol is degassed in vacuum pump firstly, then press nitrogen with high pressure into water and ethanol, and water and ethanol are kept in nitrogen saturated state. Nitrogen-saturated ethanol solution is poured into liquid cell quickly, then the solution is replaced by nitrogen-saturated water. The AFM is used to observe. As shown in Figure 6A and 6B, the sizes of bubbles absorbed on mica are smaller than that on graphite under the same conditions. The reason is that the hydrophilicity of two surfaces is different, mica is hydrophilic but graphite is hydrophobic. Gas is more easily absorbed on hydrophobic graphite surface.

**Embodiment 4**

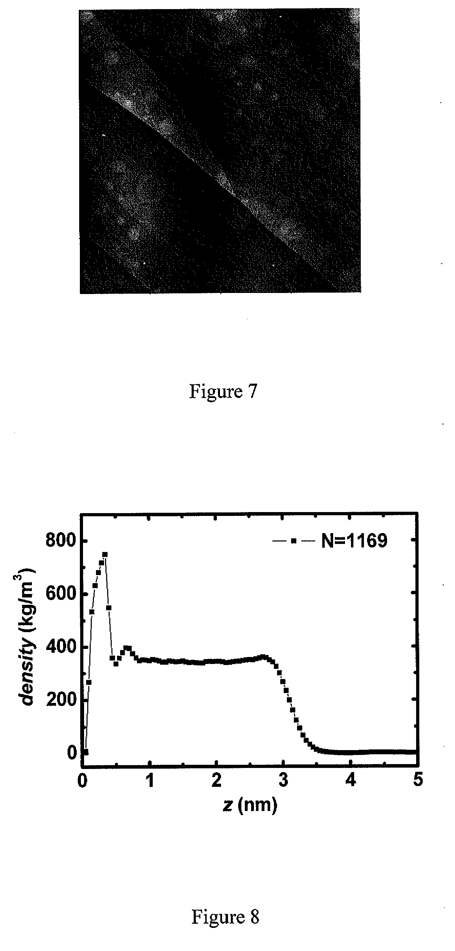

Nano gas layer is obtained on graphite surface by the exchanging of ethanol and water
The experimental process is the same as in embodiment 3. As shown in Figure 7, the lateral length of gas layers is from several nanometers to several tens micrometers and the height is from several nanometers to several tens nanometers.

**Embodiment 5**

The formation of nitrogen and hydrogen nanobubbles (gas layers) on graphite surface in water
In this invention, the calculation method is molecular dynamics simulation (software Gromacs of vesion3.2.1).
Firstly, force field parameters used are given. Covalent bonds of double atoms ($N_2$ and $H_2$) in a molecule are defined by harmonic oscillator potential:

$$V\ (r) = 1/2\ k\ (r - b)^2,$$

k and b are force constant of harmonic oscillator potential and standard bond length, respectively.
Interactions between molecules can be expressed by Lennard-Jones potential:

$$\varphi = 4\xi[(\sigma/r)^{12} - (\sigma/r)^6],$$

$\sigma$ and $\xi$ are length dimension and energy scale, respectively. As for force field parameters, we adopt Universal Force Field parameters shown in the follows:

- $b_N$=0.1120 nm, $k_N$=1280025 kJ/mol*nm², $\xi_N$=0.069 kcal/mol, $\sigma_N$=0.326nm

- $b_H$=0.0708 nm, $k_H$=758921 kJ/mol*nm², $\xi_H$=0.044 kcal/mol, $\sigma_H$=0.0392 nm

- $b_C$=0.1420 nm, $k_C$=334720 kJ/mol*nm², $\xi_C$=0.1049kcal/mol, $\sigma_C$=0.3430 nm

We adopt SPC water model.
Simulation process and results are shown in the follows:

(1) Nitrogen nanobubbles (gas layers) on graphite surface under the condition of 300K and 1 atm. At the initial state, 1169 nitrogen molecules are arranged on four layers of graphite surface composed of 6936 carbon atoms. The distance between $N_2$ molecules is $1.23\sigma_N$. The system is immersed within 12941 $H_2O$. The size of initial box is $L_x$= 7.15 nm, $L_y$=6.55 nm, $L_z$ =12 nm. The density of nitrogen in thin layer of 1.0nm<z<1.3 nm (z is the thickness of nitrogen layer) is taken. System is considered to reach the equilibrium if it can not change with the time. The total simulation time is 12.5 ns. It is found that the density of gas layer is about 330 kg/m³, which is about 300 times of the density of nitrogen in the air. At stable state, nitrogen molecules form gas layers on graphite surface as shown in Figure 8.

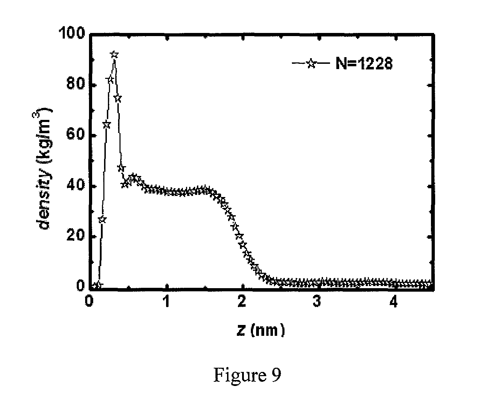

(2) Hydrogen nanobubbles (gas layers) on graphite surface under the condition of 300K and 1 atm. During the simulation, the size of initial box is $L_x$ = 7.15 nm, $L_y$= 6.55 nm, $L_z$ = 8.00 nm. Graphite planes are fixed paralleling to x-y plane, their size is about $6.91 \times 6.53$ nm², which are composed of four graphite layers with the distance of 3.40 Å between every two layers. Initially, in the box there are 1228 hydrogen molecules and 8201 $H_2O$. Hydrogen molecules are placed in the position of 3.00 Å or above from the graphite layers and formed simple cubic structures with the lattice constant of $15.3\,\sigma_H$. All simulations are performed under periodic boundary conditions in all directions. The density of hydrogen in thin layer of 1.0nm<z<1.3 nm (z is the thickness of hydrogen layer) is taken. System is considered to reach equilibrium when it can not change with the time. Berendsen semi-isotropic is coupled to the system. The curve of density changed with z is collected at the time of 4 ns shown in Figure 9. It is found that density basically kept stable in the space of 1.0nm<z<1.6nm. The density of thin hydrogen layer is about 37 kg/m³, which is 420 times of the hydrogen density under the same conditions, is about 53% of liquid hydrogen density.

**Claims**

1. A method for gas storage, **characterized that** the gas is stored in the form of nanobubbles or nano gas layers on solid-liquid surface.

2. The method of gas storage of claim 1, wherein said gas is hydrogen, said gas bubbles or gas layers are hydrogen bubbles or hydrogen gas layers.

3. The method of gas storage of claim 1 or claim 2, wherein the shape of said nanoscale bubbles or nano gas layers is regular or irregular, their height is 1-500 nm.

4. The method of gas storage of claim 1 or claim 2, wherein said solid surface is flat, irregular or porous.

5. The method of gas storage of claim 1 or claim 2, wherein said liquid is water, inorganic acid solution, inorganic salt solution, inorganic base solution, organic solution or colloidal solution.

6. The method of gas storage of claim 1, wherein said gas stored is produced by electrochemical reaction, inorganic reaction, organic reaction, biological reaction or physical method.

7. The method of gas storage of claim 2, wherein said hydrogen stored is produced by electrochemical reaction, inorganic reaction, organic reaction, biological reaction or physical method.

8. The method of gas storage of claim 7, wherein said hydrogen is produced by electrolyzing solution of electrochemical approach, conductive flat solid surface is used as cathode to absorb nanobubbles or gas layers.

9. The method of gas storage of claim 8, wherein said conductive flat solid surface is highly oriented pyrolytic graphite.

10. The method of gas storage of claim 9, wherein the voltage between cathode and anode is 0.5V-5V, reaction time is at least 0.01s.

11. The method of gas storage of claim 10, wherein the voltage between cathode and anode is 1.0V-2.5V, reaction time is 5-30s.

12. The method of gas storage of claim 8, wherein the concentration of electrolytes used in electrochemical approach is 0.001-10mol/L, electrolyte is acidic solution, base solution or salt solution of alkaline-earth metals or alkaline metals.

13. The method of gas storage of claim 12, wherein the preferred concentration of electrolytes used in electrochemical approach is 0.001-2.0 mol/L.

14. The method of gas storage of claim 12 or claim 13, wherein said acidic solution used as electrolytes is sulfuric acid, nitric acid, phosphate acid or acetate acid. Base solution is sodium hydroxide, potassium hydroxide, calcium hydroxide, barium hydroxide or magnesium hydroxide. Salt solution is nitrate, sulfate, carbonate and phosphate of sodium ions, potassium ions, calcium ions and magnesium ions.

15. The method of gas storage of claim 8, wherein inert conductive materials, namely, platinum, silver or nickel, is used as anode and reference electrode.

Figure 1

Figure 2A

Figure 2B

Figure 3

a

20 nm

2.0 μm

1.5

1.0

0.5

b

20 nm

2.0 μm

1.5

1.0

0.5

Figure 4

Figure 5

Figure 6A

Figure 6B

Figure 7

Figure 8

Figure 9

# INTERNATIONAL SEARCH REPORT

International application No.

PCT/CN2006/003046

| A. CLASSIFICATION OF SUBJECT MATTER |
|---|
| See extra sheet<br>According to International Patent Classification (IPC) or to both national classification and IPC |

| B. FIELDS SEARCHED |
|---|
| Minimum documentation searched (classification system followed by classification symbols)<br><br>IPC 8 C01B 3, C25B 1, B01D 12, H01J 37, H01M 4, G01N 1 |
| Documentation searched other than minimum documentation to the extent that such documents are included in the fields searched<br><br> |
| Electronic data base consulted during the international search (name of data base and, where practicable, search terms used)<br>CPRS, WPI, PAJ, EPODOC. Nano, bubble, gas, air, hydrogen, h2, electroly+, interface, boundary, pyroly+, graphite, HOPG, pyrographite. |

## C. DOCUMENTS CONSIDERED TO BE RELEVANT

| Category* | Citation of document, with indication, where appropriate, of the relevant passages | Relevant to claim No. |
|---|---|---|
| X | CN1584544A(SHANGHAI COMMUNICATION UNIVERSITY), 23. Feb. 2005(23.02.2005), see whole document, esp. page 1 line 3-7 and line 1-2 from the bottom, page 3 line 4 to page 5, and claims 1-4. | 1-15 |
| A | CN1434281A(SHANGHAI COMMUNICATION UNIVERSITY), 06. Aug. 2003(06.08.2003), see whole document. | 1-15 |
| A | JP2004268031A(DOKURITSU GYOSEI HOJIN SANGYO GIJUTSU SO), 30.Sep.2004(30.09.2004), see whole document. | 1-15 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br><br>08.Feb.2007(08.02.2007) | Date of mailing of the international search report<br><br>08 · MAR.2007 (0 8 · 0 3 · 2 0 0 7) |
|---|---|
| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br><br>ZHOU Quan<br><br>Telephone No. 86-10-62084687 |

Form PCT/ISA /210 (second sheet) (April 2005)

# INTERNATIONAL SEARCH REPORT

| International application No. |
| --- |
| PCT/CN2006/003046 |

Continuation of page 2

A.  CLASSIFICATION OF SUBJECT MATTER

      C01B 3/02    (2006.01)i

      C25B 1/06    (2006.01)i

      B01D 12/00   (2006.01)i

According to International Patent Classification (IPC) or to both national classification and IPC

Form PCT/ISA /210 (extra sheet) (April 2005)

| INTERNATIONAL SEARCH REPORT<br>Information on patent family members | | International application No.<br>PCT/CN2006/003046 | |
|---|---|---|---|
| **Patent Documents referred<br>in the Report** | **Publication Date** | **Patent Family** | **Publication Date** |
| CN1584544A | 23.02.2005 | NONE | |
| CN1434281A | 06.08.2003 | NONE | |
| JP2004268031A | 30.09.2004 | NONE | |

Form PCT/ISA /210 (patent family annex) (April 2005)

**EP 1 972 597 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6290753 B
- US 6517800 B

### Non-patent literature cited in the description

- **HYNEK, S. ; FULLER, W. ; BENTLEY, J.** Hydrogen storage by carbon sorption. *Int. J. Hydrogen Energy,* 1997, vol. 22, 601-610
- **DILLON, A. C. ; JONES, K. M. ; BEKKEDAHL, T. A. ; KIANG, C. H. ; BETHUNE, D. S. ; HEBEN, M. J.** Storage of hydrogen in single-walled carbon nanotubes. *Nature,* 1997, vol. 386, 377-379
- **HIRSCHER, M. ; BECHER, M. ; HALUSKA, M. ; ZEPPELIN, F. ; CHEN, X. ; DETTLAFF-WEGLIKOWSKA, U. ; ROTH, S.** Are carbon nanostructures an efficient hydrogen storage medium?. *Journal of Alloys and Compounds,* 2003, 356-357433-437
- **RODRIGUEZ, N. M. ; CHAMBERS, A. ; BAKER, R. T. K.** Catalytic engineering of carbon nanostructures. *Langmuir,* 1995, vol. 11, 3862-3866
- **STEITZ R. et al.** Nanobubbles and their precursor layer at the interface of water against a hydrophobic substrate. *Langmuir,* 2003, vol. 19, 2409-2414
- **SCHWENDEL D. et al.** Interaction of water with self-Assembled monolayers: neutron reflectivity measurements of the water density in the interface region. *Langmuir,* 2003, vol. 19, 2284-2293